# EUROPEAN PATENT SPECIFICATION

(11) **EP 1 084 437 B1**
(45) Date of publication and mention of the grant of the patent: **26.06.2002**
(21) Application number: 99922014.8
(22) Date of filing: 28.05.1999
(51) Int. Cl.: G02B 7/08, G03B 19/18

(54) **MOTION PICTURE CAMERA FOCUS INDICATOR USING THE PARALLAX GEOMETRY OF TWO VIDEO CAMERAS**
FOKUSANZEIGE FÜR FILMKAMERA MIT HILFE DER PARALLAXGEOMETRIE VON ZWEI VIDEOKAMERAS
INDICATEUR DE MISE AU POINT POUR CAMERA CINEMATOGRAPHIQUE UTILISANT LA GEOMETRIE DE PARALLAXE DE DEUX CAMERAS VIDEO

(30) Priority: 01.06.1998 US 87802
(43) Date of publication of application: 21.03.2001
(73) Proprietor: Diaconu, Dan Mugur, North Vancouver, British Columbia V7M 1E9 (CA)
(72) Inventor: Diaconu, Dan Mugur, North Vancouver, British Columbia V7M 1E9 (CA)
(74) Representative: Dendorfer, Claus, Dr.
(86) International application number: PCT/CA99/00475
(87) International publication number: WO 99/63378

(56) References cited:
- GB-A- 2 074 320
- GB-A- 2 226 923
- US-A- 4 531 822
- US-A- 4 534 629
- US-A- 4 601 557
- US-A- 4 720 805
- US-A- 5 092 670
- US-A- 5 747 822

## Description

### Field of the Invention

This invention relates in general to focus indicator systems for use with motion picture cameras. The invention relates specifically to a focus indicator system which uses parallax to indicate when an object in the field of view of a motion picture camera is in focus.

### Background of the Invention

Maintaining a properly focussed image is critically important in film productions. This task is complicated by the fact that many shots require a moving object to be kept in focus or require different objects at different distances from the camera to be in focus at different times during the shot. Typically, on a movie set, the person responsible for focussing the camera, who is called the "first assistant camera" prepares for each shot by carefully measuring the distance to each object which will be in focus during the shot and then carefully marking the focussing ring on the camera lens with the measured distances. All professional lenses have markings which indicate the distance at which the lens is focussed. These markings are not continuous. Even if the precise distance to an object is known it is often necessary to estimate how the focussing ring should be set to focus on the object because the lens will often not have a marking which indicates when the lens os focussed at that precise distance. Focus is particularly critical when using telephoto lenses because, in some cases, one inch (2.5 cm) may mean the difference between soft focus and sharp focus.

During the shot the first assistant camera adjusts the focussing ring to bring each object into precise focus at the desired time. This method works well with immobile objects. If the camera or the elements to be photographed are in motion it becomes very difficult to maintain the proper focus. Furthermore, this method is time consuming. The first assistant camera must make careful measurements before each shot. The enormous costs of production creates a need for a quick and accurate means for maintaining focus during a shot.

The prior art discloses a number of ways to maintain focus in a movie camera. U.S. Patent No. 5,092,670 to Preston discloses an automatic focussing system for use with a motion picture camera. This system incorporates a laser range finder and triangulation to determine the distance to the object and adjusts the camera lens accordingly. The laser range finder is mounted on a tripod that is a fixed distance from the camera. While this system is useful for tracking moving objects, it is not practical for use with a moving camera. Where wide angle lenses are used in tight quarters it may be difficult to keep the range finder out of the field of view of the camera. Finally the system requires an operator for the range finder. This adds to the cost of filming.

Shenk, U.S. Patent No. 4,531,822 discloses an auto-focussing camera incorporating an object presence detecting transducer. The camera automatically focuses on objects within its sonic acceptance angle. The Shenk device does not enable a user to focus on one of several objects within the acceptance angle or to shift the focus between different objects in the sonic acceptance angle.

Bogle et al., U.S. Patent Nos. 4,601,557 and 4,534,629 disclose motion picture cameras having automatic focussing systems. The cameras uses microwave transmitters to transmit signals to targets wearing reactive signal generators. These systems require the objects of focus to wear a signal generator. This is not always practical, for instance when shooting nature documentaries.

Some prior art auto-focus systems include a partially silvered mirror, or the like, which intercepts some of the light passing through the lens of a motion picture camera. Such systems are undesirable because they degrade the optical path. In cinematography it is important to maintain the highest quality optical path possible.

One can compensate somewhat for inaccurate focussing by using a small lens aperture to increase the depth of field of the motion picture camera. This can be undesirable, especially when shooting at night, because a small lens aperture reduces the amount of light that passes through the lens. Using a small lens aperture can make it necessary to provide supplementary illumination. This adds expense and increases the time needed to set up for a shoot.

Systems which measure distance to an object by measuring the parallax of two laser beams or other parallax indicators typically suffer from the defect that they are only effective on the optical axis of the camera's lens. Such systems generally cannot provide indications of the distance to objects which are not on this axis.

What is needed is a focus indicator system for a motion picture camera that will allow the person responsible for focussing the camera to quickly verify that a selected object is in precise focus. There is a particular need for such a device that can work with existing camera lenses and cameras.

### SUMMARY OF THE INVENTION

This invention provides a focus indicator system for a motion picture camera. The focus indicator comprises first and second spaced apart pivotally mounted video cameras. The video cameras can counter rotate about parallel first and second axes respectively. The first and second video cameras have optical axes which cross one another at a point in front of the camera. A monitor displays first and second images generated by the video cameras. The first and second video cameras may be coupled by a coupling to a focus ring on a camera to counter rotate in response to rotation of the focus ring to maintain the crossing point at the distance for which the camera is focussed.

The coupling between the lens and the video cameras preferably comprises an electro-mechanical coupling. Most preferably the coupling comprises a transducer engageable with the focus ring, a control circuit to receive signals from the transducer which indicate the change of position of the focus ring in relation to the focus ring's position when the focus distance is set to infinity, a motor controlled by the control circuit, and a linkage driving counter rotation of the video cameras in response to operation of the motor.

Yet another aspect of the invention provides a method for indicating when a lens of a motion picture camera is focussed on an object. The method comprises providing a focus indicator having first and second video cameras mounted on opposed sides of a lens of a motion picture camera; in response to rotation of a focus ring on the lens pivoting the first and second video cameras about parallel axes so that optical axes of the first and second video cameras cross in front of the lens; and, simultaneously displaying on a monitor first and second images of an object as viewed by the first and second video cameras respectively. The method can be used to focus on objects which are not in the center of a field of view of the lens.

### BRIEF DESCRIPTION OF THE DRAWINGS

In drawings which illustrate specific embodiments of the invention, but which should not be construed as restricting the spirit or scope of the invention in any way:
Figure 1 is a partially schematic top view of a motion picture camera equipped with a focus indicator according to the invention;
Figure 2 is a front elevation thereof,
Figure 3 is a side elevation thereof,
Figure 4A is a schematic view of an alternative embodiment of the invention which has a pair of video cameras mounted on a bracket on either side of a camera lens;
Figure 4B is a view of the alternative embodiment of Figure 4A with the bracket remounted so that the video cameras are above and below the lens;
Figure 5A is a top plan schematic view of a pair of video cameras in a focus indicator according to the invention wherein the focus distance is set at a first distance;
Figure 5B is a top plan schematic view of a pair of video cameras in a focus indicator according to the invention wherein the focus distance is a second distance less than the first distance;
Figure 6A is a view of a monitor screen of the focus indicator with the camera focussed at the first distance of Figure 5A;
Figure 6B is a view of the monitor screen with the camera focussed at the second distance of Figure 5B;
Figure 6C is a view of the monitor screen showing a very distant object with the camera focussed at infinity; and,
Figure 7 is a block diagram illustrating functional components of the invention.

### DETAILED DESCRIPTION

### Apparatus

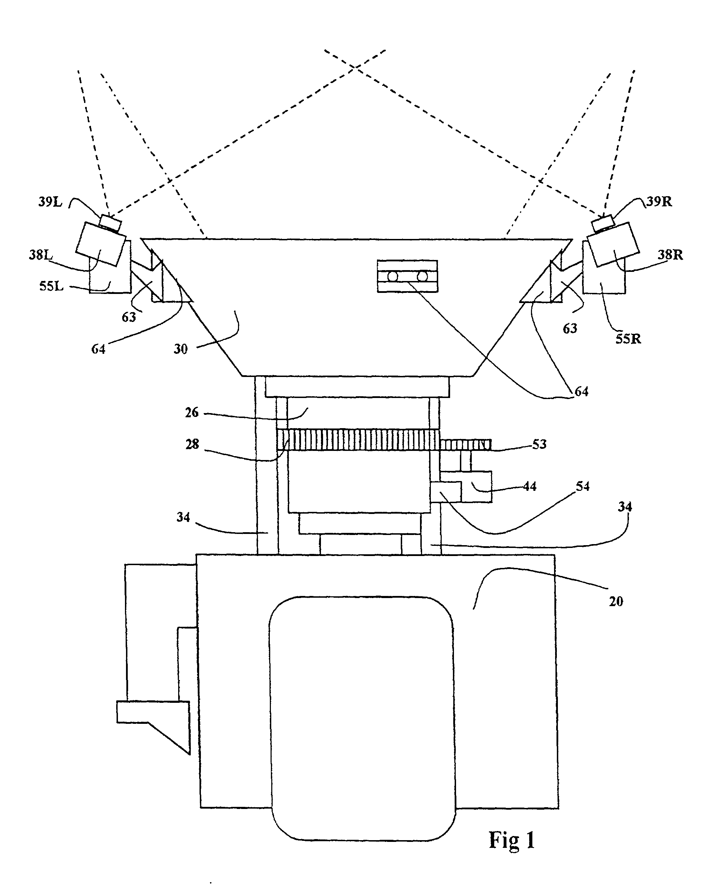

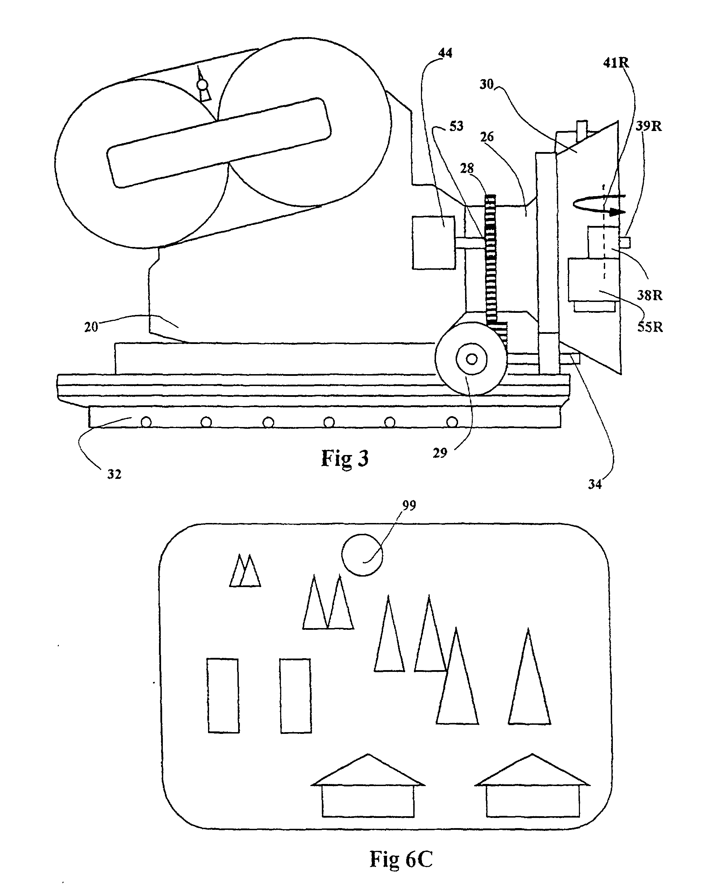

Figures 1, 2 and 3 show views of a motion picture camera system comprising a motion picture camera **20** equipped with a focus indicator according to the invention. Camera **20** has a lens **26** which includes.a focus ring **28** for adjusting the distance at which camera **20** is focussed. A separate focus knob **29** (Fig. 3) may be coupled to focus ring **28** so that focus ring **28** can be easily adjusted by hand. Typically a matte box **30** is mounted at the forward end of lens **26**. Matte box **30** is typically slidably mounted on a pair of support rods **34** which are themselves mounted on a plate **32.** The distance from matte box **30** to the body of motion picture camera **20** (Figure 3) can be precisely adjusted to accommodate different lens lengths. Camera **20** is preferably a professional motion picture camera as is used in cinematography.

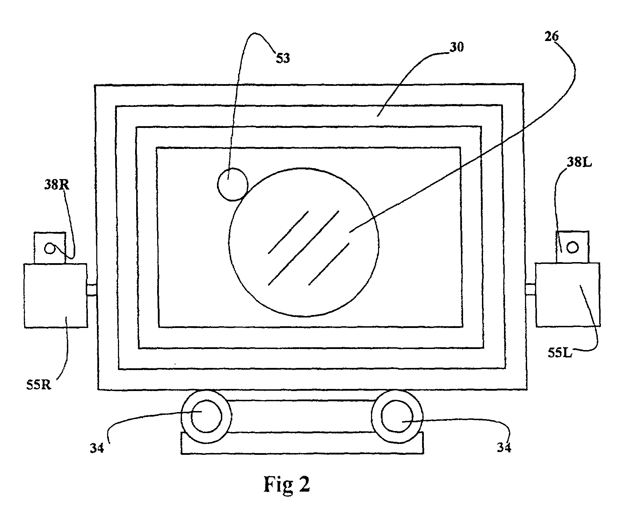

The focus indicator comprises a pair of video cameras **38R** and **38L** (collectively, video cameras **38**) which are respectively pivotally mounted on opposite sides of lens **26** for rotation about axes **41R** and **41L** (collectively axes **41 -** Figs. 2. 4A and 4B) which are parallel to the film plane of camera **20**. Video cameras **38** should be located so that they are not in the field of view of lens **26.** Most preferably video cameras **38** are located symmetrically with respect to the centre line ***H*** of lens **26**.

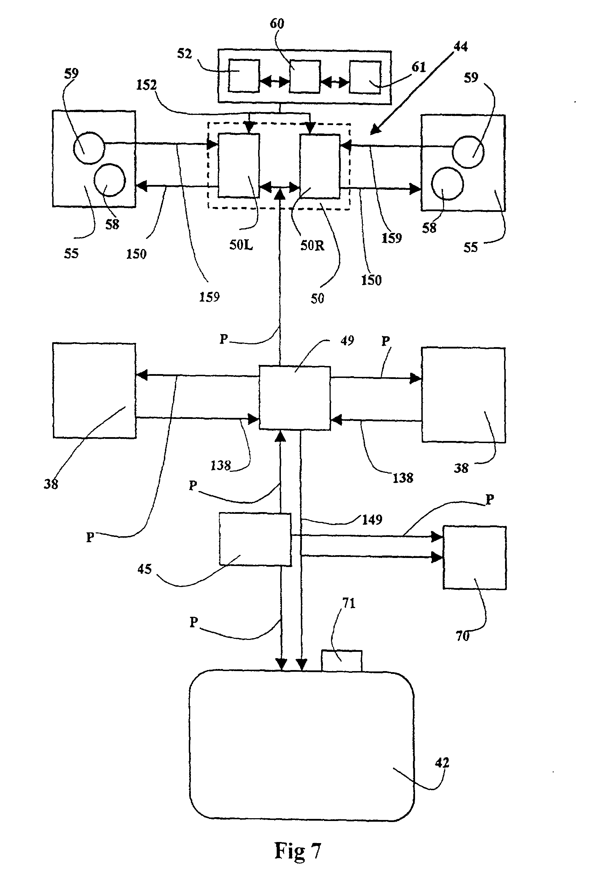

Video cameras **38** each have a field of view. Each video camera **38** generates an image of its field of view and displays the image on a monitor **42.** The images generated by video cameras **38L** and **38R** are superimposed on monitor **42**. Video cameras **38** are preferably compact and lightweight. Video cameras **38** preferably have zoom lenses **39,** or interchangeable fixed focus lenses **39,** so that their fields of view can be made to be roughly equal to the field of view of lens **26.** Video cameras **38** are preferably sensitive so that they capable of creating images for display on monitor **42** under low light conditions. Video cameras **38** have appropriate power supplies. For example, video cameras **38** may be powered by a battery, or other suitable power source, **45** (Fig. 7). Power connections are indicated by the lines labelled **P** in Figure 7.

Each video camera **38** has an optical axis **43.** Most preferably the optical axes **43** of video cameras **38** and centre line ***H*** all lie in the same plane. Video cameras **38** are coupled to focus ring **28** of lens **26** by a coupling indicated generally by **44** (Fig. 7). Coupling **44** is preferably an electro-mechanical coupling. Coupling **44** operates so that optical axes **43** for video cameras **38** are both parallel to the axis ***H*** of lens **26** when focus ring **28** is adjusted for focus at infinity. When focus ring **28** is turned to focus lens **26** at another distance then coupling **44** operates to rotate video cameras **38** about axes **41.**

When the focus indicator is in use, the optical axes **43** of video cameras **38** cross each other, (as viewed from above) on centre line ***H,*** at the distance on which lens **26** is focussed. This distance may be called the "focus distance" of lens **26.** While optical axes **43** preferably intersect, it is not necessary for optical axes **43** to intersect one another. One of optical axes **43** may be displaced somewhat relative to the other optical axis **43.** The fields of view of video cameras **40** should substantially overlap.

Signals **138R** and **138L** carrying images from each of video cameras **38R** and **38L** are carried to a video mixer **49** (Fig. 7). The output **149** from video mixer **49** is displayed on monitor **42.** The result is that images from both of video cameras **38** are simultaneously displayed on monitor **42**. The first assistant camera can tell whether a particular object is in focus by viewing the images displayed on monitor **42** as is described in more detail below. Instead of connecting cameras **38** to monitor **42** by wires, each video camera **38** may have a wireless video transmitter for sending its image to a video receiver associated with display **42.**

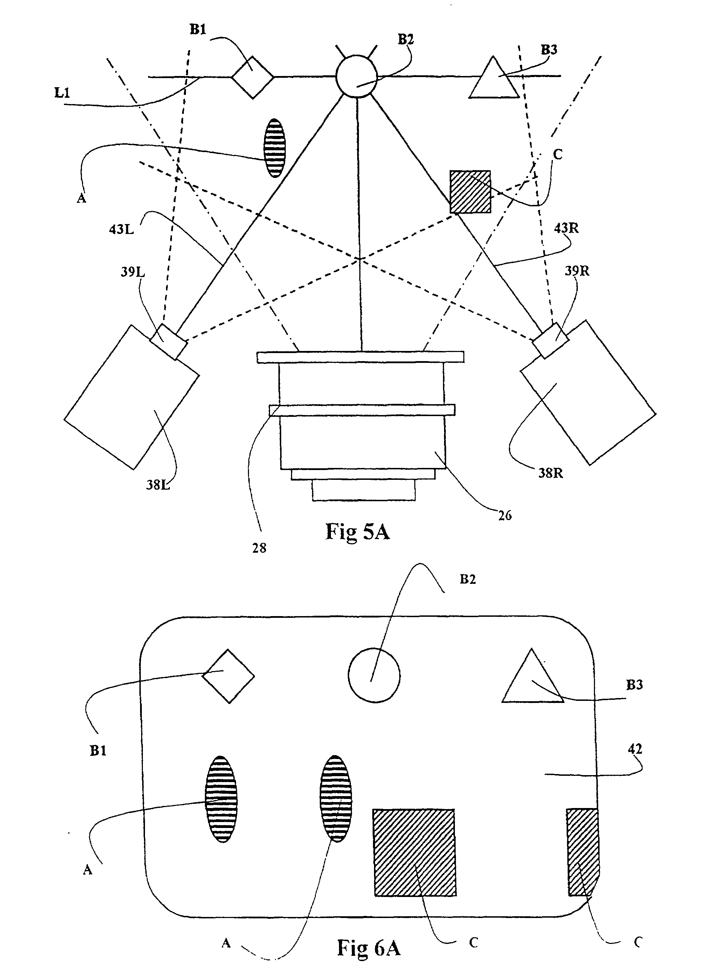

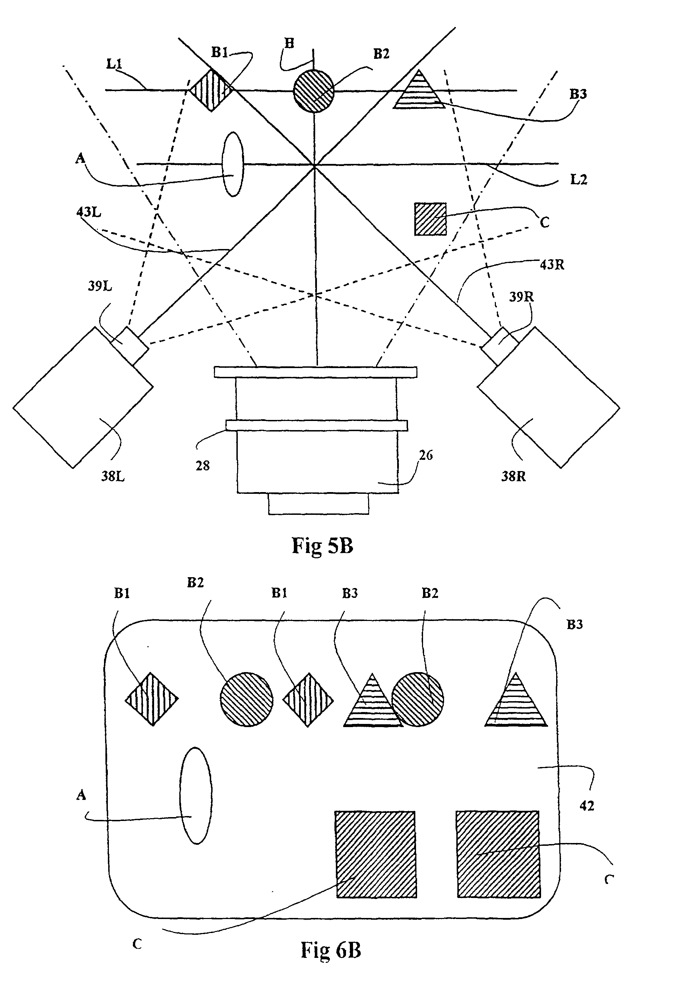

As shown in Figures 5A, 5B, 6A and 6B, a person viewing monitor **42** can tell whether a particular object is in focus or not. If the focus indicator has been properly set up, as described below, and lens **26** is focussed on an object, then the image of that object taken by each of video cameras **38** will coincide on monitor **42.** If the object is not in focus then the image of that object taken by one of video cameras **38** will be offset relative to the image of that object as taken by the other one of video cameras **38.**

In the preferred embodiment of the invention coupling **44** includes a controller **50** (Fig. 7) which receives input from a transducer **52** coupled to focus ring **28.** Controller **50** adjusts the angular position of each of video cameras **38R** and **38L** about their respective pivot axes **41R, 41L.** Controller **50** causes video cameras **38R, 38L** to pivoted by the same amount, but in opposite senses, as the focus of lens **26** is adjusted by rotating focus ring **28** so that the optical axes **43** of video cameras **38** cross at the focus distance of lens **26**.

As it is desirable that the focus indicator can operate with standard unmodified lenses **26** it is generally desirable for the focus indicator to couple to the outer surface of focus ring **28.** In the preferred embodiment, which is illustrated in the drawings, coupling **44** comprises a gear **53** which meshes with teeth on the circumference of the focus ring **28.** The focus rings **28** in most professional lenses have suitable teeth. A few different interchangeable gears **53** may be provided to match the focussing rings on different lenses. Gear **53** is supported adjacent focus ring **28** by a suitable bracket **54**. Gear **53** is connected to a transducer **52,** which may, for example, be a potentiometer, an optical encoder or the like. Transducer **52** generates or modifies an electrical or optical signal in a way which varies as focus ring **28** is turned. Transducer **52** preferably produces a signal which is proportional to the amount of movement of focussing ring **28.** This signal is carried from transducer **52** to controller **50.**

In the currently preferred embodiment of the invention, the angular position of each video camera **38** is set by one of two servomotors **55R, 55L**. Each servomotor turns a member (not shown) on which one of video cameras **38R, 38L** is mounted. The servomotors preferably comprise step down transmissions **58** which are coupled to the members on which the video cameras **38** are mounted. This permits video cameras **38** to be smoothly simultaneously rotated through equal angles but in opposite senses about axes **41R** and **41L** in response to changes in the focus distance of lens **26**. Transmissions **58** preferably have ratios of about 2000:1 to provide very smooth adjustment of the angular positions of video cameras **38** while permitting video cameras **38** to track reasonably fast changes in focus of lens **26**.Transmissions **58** may comprise a worm gear. Servomotors **55** preferably also comprise feedback transducers **59** to provide feedback signals **159** to controller **50**.

As shown in Figure 7, where video cameras **38** are positioned by means of servomotors **55,** controller **50** preferably comprises a pair of servo controllers **50R** and **50L** one for each servomotor **55.** The servo controllers may comprise, for example, **MOTOROLA™** model No. MC 33030 dc servo controllers. Each servo controller is connected to receive a signal **152** from transducer **52** and a feed back signal **159** from a second transducer **59.** Second transducer **59** is coupled to detect directly the angle of its corresponding video camera **38** and to provide feedback to the controller **50** for that video camera **38**.Transducer **59** may be coupled directly to the output of servomotor **55,** to the motor of servomotor **55** itself, or to an intermediate point in transmission **58.** Each servo controller **50** generates a drive signal **150** which drives its corresponding servomotor **55**.

Coupling **44** must be adjustable because, for different lenses **26,** the range of rotation and diameter of focus ring **28** can differ. Furthermore, the closest possible focus distance is different for different lenses. In the preferred embodiment of the invention, controller **50** comprises a control **60,** which can be used to adjust the amount of rotation of video cameras **38** produced by a given input from transducer **52.** Preferably a second control **61** is provided to adjust the offset of the images provided by cameras **38.**

In the embodiment illustrated in Figures 1-3, video cameras **38,** servo motors **55** and step-down transmissions **58** are mounted on brackets **63,** which are received in holders **64** on matte box **30.** This permits the focus indicator to be quickly attached to or detached from camera **20.**

The focus indicator can preferably be selectively attached to the camera system in at least two orientations. In a first "horizontal" orientation video cameras **38** are on either side of lens **26**. In a second "vertical" orientation video cameras **38** are located above and below lens **26.** Preferably holders **64** are provided on top and bottom of matte box **30** as well as on each side of matte box **30**. This permits video cameras **38** to be mounted on either side of lens **26,** as shown. or, in the alternative, mounted above and below lens **26**. Positioning the focus indicator with video cameras **38** above and below lens **26** allows the focus indicator to be used in confined areas.

The distance between video cameras **38** is preferably adjustable. When used with a typical motion picture camera **20,** video cameras **38** are typically on the order of 14 to 20 inches (35 to 50 cm) apart. If the motion picture camera **20** is being used in a telephoto shot, a greater distance separating video cameras **38** may be preferable to achieve greater accuracy of focus.

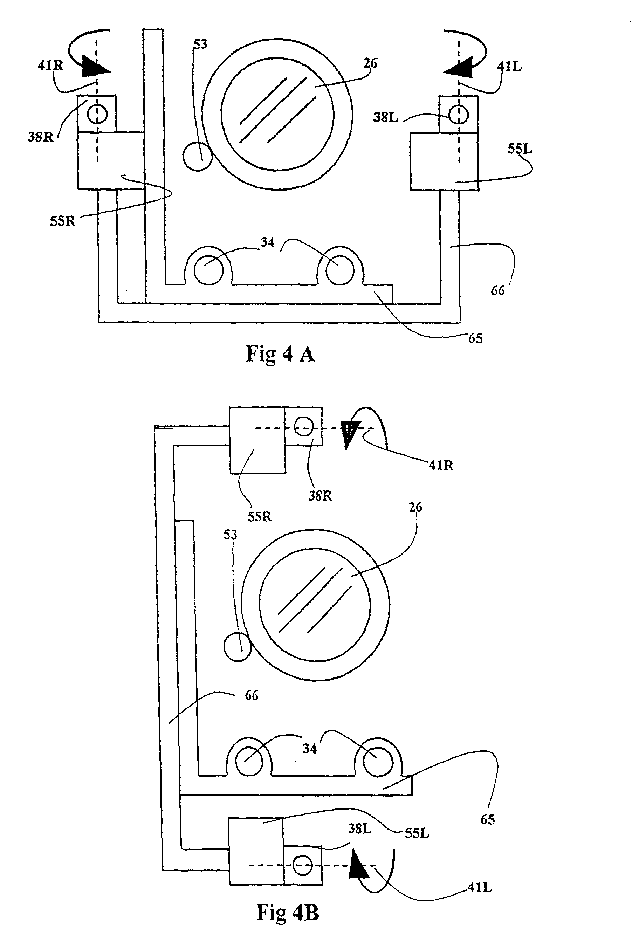

Figures 4A and 4B show an alternative embodiment of the invention in which a focus indicator has an L-shaped bracket **65** secured to rods **34**. Bracket **65** may be locked in position at a desired point along rods **34** by any suitable locking means. Video cameras **38** are mounted on a bracket **66,** which may be connected to bracket **65** in either of two orientations. The focus indicator of Figures 4A and 4B may be mounted with video cameras **38** positioned on either side of lens **26** as seen in Figure 4A, or alternatively above and below lens **26** as best seen in Figure 4B.

In the embodiment of Figures 4A and 4B, the position of video cameras **38** can be moved forward or rearward relative to matte box **30** by sliding bracket **65** forward or rearward along rods **34.**

Monitor **42** is located in a position where the first assistant camera (who is responsible for focussing camera **20)** can easily view monitor **42.** For example, monitor **42** may be mounted at a position above camera **20.** In a preferred embodiment of the invention, monitor **42** is detachable. Where monitor **42** is detachable, monitor **42** may be connected to other components of the focus indicator by a wire. Most preferably, however, the focus indicator includes a wireless video transmitter **70,** which transmits an image for displaying on monitor **42,** to a compatible receiver **71** built into monitor **42.** When monitor **42** is connected to the focus indicator then the image for displaying on monitor **42** is conducted directly to monitor **42** by a suitable cable and transmitter **70** and receiver **71** are not active. Transmitter **70** and receiver **71** may be turned on automatically when monitor **42** is disconnected from the focus indicator or switches may be provided so that they may be manually turned on.

Monitor **42** is preferably mounted in a manner which permits it to be rotated through 90 degrees when the orientation of video cameras **38** is changed from vertical to horizontal, or vice versa. In the alternative, video cameras **38** may each be housed in a tubular case. The case of each video camera **38** may be received in a tubular holder not shown. Video cameras **38** can then be rotated in their holders so that the images produced by video cameras **38** remain upright on monitor **42** when the focus indicator is moved from a horizontal orientation (shown in Figure 4A) to a vertical orientation (shown in Figure 4B). Detent mechanisms (not shown) may be provided in the holders so that video cameras **38** may be easily rotated into the correct orientation for use in horizontal or vertical orientations.

### Method of Use

A focus indicator is prepared for use by mounting a desired lens **26** on camera **20** and adjusting the separation distance of video cameras **38** to match the lens and shooting conditions. If lens **26** is a wide-angle lens or if the shooting location is very cramped then cameras **38** will typically be positioned close to one another. If lens **26** is a telephoto lens then video cameras **38** will generally be positioned farther apart to provide better accuracy. The distances from each video camera **38** to lens **26** are preferably equal.

The first assistant camera next adjusts the zoom of both of video cameras **38** so that the images displayed on monitor **42** are of similar size and perspective to the field of view through lens **26** of camera **20.** A single control may be provided to simultaneously zoom each of video cameras **38** so that both cameras **38** will always have the same zoom setting. In the alternative, video cameras **38** may have zoom lenses **39** which are marked with a focal length scale so that they can both be set easily to the same focal length.

Next the first assistant camera sets focus ring **28** to focus lens **26** at infinity and points camera **20** at a distant object. Transducer **52** is set to its position representing focus at infinity. This causes video cameras **38R, 38L** to be oriented so that their optical axes **43** parallel to axis ***H*** of lens **26.** Control **61** is used, if necessary to superimpose the images of the distant object produced by each of video cameras **38** on monitor **42.** The image of a distant object **99** as displayed on monitor **42** is shown in Figure 6C. Gear **53** is then meshed with the teeth on focus ring **28**.

Next, the first assistant camera rotates focus ring **28** so that lens **26** is focussed at its minimum focus distance on an object **A** (Figure 5A) which is located in front of camera **20** on line ***L2.*** The first assistant camera manipulates control **59** to cause controller **50** to turn video cameras **38** until the two images of object **A** are superimposed on monitor **42.** After this has been done, controller **50** will automatically pivot video cameras **38** by equal amounts, in opposite senses, in response to changes in the position of focus ring **28** so that the optical axes **43** of cameras **38** cross at the focus distance of lens **26.**

Figure 6B shows the screen of monitor **42** when lens **26** is focussed on a first object **A** as shown in Figure 5B and the focus indicator has been set up as described above. Several objects **B1, B2, B3** are located farther away from lens **26** than object **A.** Objects **B1, B2,** and **B3** are not in focus. Another object **C** is closer to lens **26** than object **A.** Object **C** is also not in focus. It can be seen that monitor **42** displays two images of each of objects **B1, B2, B3** and **C**. The images are offset from one another. As shown in Figure 5B, when lens **26** is focussed on object **A,** video cameras **38** are each aimed in a different direction. Any object not at the focus distance of lens **26** will appear as a double object on monitor **42.**

As seen in Figure 6A, when focus ring **28** is rotated so as to focus lens **26** on objects **B1, B2,** and **B3** which are located farther away than object **A** then cameras **38** are rotated simultaneously and in opposite directions until their optical axes **43** are more nearly parallel with centre line ***H.*** After cameras **38** have been rotated then the images of objects **B1, B2,** and **B3** on monitor **42** as produced by each of cameras **38** coincide, as shown in Figure 6A. The images of object **A** produced on monitor **42** by each of cameras **38** are no longer aligned with one another and produce a double image on monitor **42.** Object **C** also produces a double image on monitor **42.** The first assistant camera can thus tell from viewing monitor **42** that objects **B1, B2,** and **B3** are in focus and objects **A** and **C** are not in focus.

It can be appreciated that the adjustability of coupling **44** allows the use of a focus indicator with a wide variety of lenses commonly used in the motion picture industry. No modifications to the lenses are necessary as long as they are equipped with focus rings capable of being engaged by gear **88** or otherwise coupled to transducer **52**.

After the focus indicator has been calibrated for the lens **26** being used, as explained above, the first assistant camera will continue to adjust the focus of lens **26** by manually rotating focus ring **28** or by operating a wireless transmitter or other focus driving device to remotely manipulate focus ring **28.** As this is done, video cameras **38R, 38L** automatically pivot, as described above. The first assistant camera can see immediately by viewing monitor **42** what objects in the fields of view of cameras **38** (and lens **26**) are in precise focus.

The ease with which the first assistant camera can determine where the focus of camera **20** is at any particular time greatly improves the speed and efficiency with which the first assistant camera can maintain focus in a situation where the distance from camera **20** to the object of the shot changes rapidly. The precision with which the focus indicator permits a lens **26** to be focussed in low light conditions can permit shooting with a larger aperture (and therefore a smaller depth of field) than would otherwise be possible. This, in turn, can reduce or eliminate the need for supplementary illumination systems in some cases.

As will be apparent to those skilled in the art in the light of the foregoing disclosure, many alterations and modifications are possible in the practice ofthis invention without departing from the spirit or scope thereof. For example, it will be readily apparent to those skilled in the art that other equivalent systems may be provided to cause video cameras **38** to pivot in opposite senses about parallel axes **41L** and **41R** as the focus of lens **26** is changed. Controller **50** may take many forms using known circuit elements. Instead of servo motors **55** the invention could be practised, for example, using a stepper motor a small direct current motor, or another actuator capable of smoothly turning video cameras **38** by a finely controlled amount. While motors **55** have been illustrated as rotary motors, motors **55** could comprise one or more linear actuators suitably linked to counter rotate video cameras **38**. Instead of providing a separate motor **55** to control each video camera **38** a single motor could be provided to control both cameras **38** simultaneously through a suitable mechanical linkage. The mechanism for allowing the spacing between video cameras **38** to be adjusted may also be varied without departing from the invention.

While it is not preferred, the spacing between cameras **38** may be fixed. While the connection between transducer **52** and controller circuit **50** has been described as an electrical connection, the connection could comprise an optical link instead. Some types of controller **50** may not require feedback from transducers **59.** Video cameras **38** may be firmly supported on either side of lens **26** in any suitable way, not just in the manners described above.

Each video camera **38** may comprise a wireless transmitter which transmits a signal capable of being received by a receiver associated with monitor **42.** Depending upon the type of monitor **42** which is used it may not be necessary to provide a separate video mixer **49**. Monitor **42** may comprise any suitable display capable of displaying images from video cameras **38** in real time. Those skilled in the art will realize that many other modifications and alterations may be made without departing from the broad scope of this invention.

Accordingly, the scope of the invention is to be construed in accordance with the substance defined by the following claims.

## Claims

1. A focus indicator system for a motion picture camera, to operate in conjunction and display the focus of a lens of said motion picture camera, the focus indicator comprising:
(a) first and second video cameras pivotally mounted at spaced apart locations diametral opposite said lens, the first and second video cameras having optical axes which cross one another at a crossing point on the optical axes of the lens of said motion picture camera;
(b) operative means to receive and display simultaneously first and second images as seen by the first and respectively second video cameras in superimposed relation to one another;
(c) attaching means to attach said first and second video cameras to said motion picture camera, wherein said first and second video cameras may be adjustably moveable toward and away from one another;
wherein the first and second video cameras may be coupled by a coupling to a focus ring on a camera to counter rotate in response to rotation of the focus ring to maintain the crossing point at a distance in front of the lens equal to a distance at which the motion picture camera is focused.

2. The focus indicator system of claim 1,
wherein said attaching means includes a frame attached to said motion picture camera, the first and second video camera being mounted to said frame with said first video camera on one side and said second video camera on a second side of the motion picture camera opposite the first side.

3. The focus indicator system of claim 1,
further including a transducer coupled to said focus ring and wherein the focus coupling comprises a control circuit to receive signals from the transducer, the signals indicative of the amount of movement of said focus ring, and including a motor assembly operative to counter rotate said first and second video cameras in response to signals from said control circuit.

4. The focus indicator system of claim 2,
wherein the operative means includes a video receiver, a wireless video transmitter and a monitor.

5. The focus indicator system of claim 2,
wherein said frame is selectively mountable reversibly movable relative to said motion picture camera from a position in which the first and second video cameras are respectively above and below, to the left and right said motion picture camera or in any intermediate position.

6. A method for indicating where the lens of a motion picture camera is focussed, the method comprising the steps:
(a) providing a focus indicator comprising first and second video cameras mounted on opposed sides of said lens of said motion picture camera;
(b) pivoting the first and second video cameras about parallel axes in response to rotation of the focus ring of the lens, so that optical axes of the first and second video cameras cross on the optical axis of the lens;
(c) displaying simultaneously on a monitor's screen first and second images of an object as viewed by the first and second video cameras respectively;
(d) correlating range of movement of said focus ring with range of counter rotation of said video cameras;
(e) adjusting the focus ring of the lens of the primary camera to focus the lens on an object intermediate infinity and the minimum setting focusing distance until the two superimposed images on the monitor screen coincide thereby indicating that the lens of said primary camera is in focus on an object represented by the two superimposed images.

7. The method of claim 6,
further indicating when the lens of a motion picture camera is focused on an intermediate distance between two objects by indicating on the screen of a monitor two sets of double images corresponding the two objects, overlapped only partially and in even amounts, thereby indicating the lens of said motion picture camera is set at a distance corresponding to the intermediate position between the two objects enabling this way both objects to be photographed in equal amounts of depth of field.

## Patentansprüche

1. Fokussierungsanzeigesystem für eine Laufbildkamera, das zusammen mit der Laufbildkamera arbeitet und die Fokussierung eines Objektivs der Laufbildkamera anzeigt, wobei der Fokussierungsanzeiger aufweist:
(a) eine erste und eine zweite Videokamera, die schwenkbar an voneinander beabstandeten, bezüglich des Objektivs diametral gegenüberliegenden Stellen angebracht sind, wobei die erste und die zweite Videokamera optische Achsen aufweisen, die einander an einem Schnittpunkt auf der optischen Achse des Objektivs der Laufbildkamera schneiden;
(b) Betriebsmittel, um ein erstes und ein zweites Bild, wie es von der ersten beziehungsweise der zweiten Videokamera aufgenommen wird, zu empfangen und gleichzeitig und einander überlagert anzuzeigen;
(c) Befestigungsmittel, um die erste und die zweite Videokamera an der Laufbildkamera anzubringen, wobei die erste und die zweite Videokamera einstellbar zueinander hin und voneinander weg bewegbar sein können;
wobei die erste und die zweite Videokamera durch eine Koppeleinrichtung mit einem Fokussierungsring einer Kamera koppelbar sind, um, ansprechend auf eine Drehbewegung des Fokussierungsrings, einander entgegengesetzte Schwenkbewegungen auszuführen, um den Schnittpunkt in einem Abstand vor dem Objektiv zu halten, der gleich einem Abstand ist, auf den die Laufbildkamera fokussiert ist.

2. Fokussierungsanzeigesystem nach Anspruch 1,
wobei die Befestigungsmittel einen an der Laufbildkamera angebrachten Rahmen aufweisen und die erste und die zweite Videokamera an dem Rahmen angebracht sind, wobei sich die erste Videokamera an einer Seite der Laufbildkamera und die zweite Videokamera an einer zweiten Seite der Laufbildkamera, gegenüber der ersten Seite, befindet.

3. Fokussierungsanzeigesystem nach Anspruch 1,
ferner mit einem mit dem Fokussierungsring gekoppelten Wandler, wobei die Fokussierungs-Koppeleinrichtung eine Steuerschaltung aufweist, um Signale von dem Wandler zu empfangen, wobei die Signale den Betrag der Bewegung des Fokussierungsrings anzeigen, und mit einer Motoreinheit, die dazu eingerichtet ist, ansprechend auf Signale von der Steuerschaltung einander entgegengesetzte Schwenkbewegungen der ersten und der zweiten Videokamera zu bewirken.

4. Fokussierungsanzeigesystem nach Anspruch 2,
bei dem die Betriebsmittel einen Videoempfänger, einen drahtlosen Videosender und einen Monitor aufweisen.

5. Fokussierungsanzeigesystem nach Anspruch 2,
bei dem der Rahmen eine wahlweise Montage gestattet, so daß er bezüglich der Laufbildkamera von einer Stellung, in der sich die erste und die zweite Videokamera über beziehungsweise unter der Laufbildkamera befinden, in eine Stellung, in der sich die erste und die zweite Videokamera links beziehungsweise rechts der Laufbildkamera befinden, oder in irgendeine Zwischenstellung, reversibel bewegbar ist.

6. Verfahren zum Anzeigen, worauf das Objektiv einer Laufbildkamera fokussiert ist, wobei das Verfahren die Schritte aufweist:
(a) Bereitstellen eines Fokussierungsanzeigers mit einer ersten und einer zweiten Videokamera, die auf gegenüberliegenden Seiten des Objektivs der Laufbildkamera angebracht sind;
(b) Schwenken der ersten und der zweiten Videokamera um parallele Achsen, ansprechend auf eine Drehbewegung des Fokussierungsrings des Objektivs, so daß optische Achsen der ersten und der zweiten Videokamera sich auf der optischen Achse des Objektivs schneiden;
(c) gleichzeitiges Anzeigen eines ersten und eines zweiten Bildes eines Objekts, wie es von der ersten beziehungsweise der zweiten Videokamera aufgenommen wird, auf einem Bildschirm eines Monitors;
(d) Korrelieren eines Bewegungsbereichs des Fokussierungsrings mit einem Bereich einander entgegengesetzter Schwenkbewegungen der Videokameras;
(e) Einstellen des Fokussierungsrings des Objektivs der Hauptkamera, um das Objektiv auf ein Objekt zwischen unendlich und der Mindesteinstellung der Fokussierungsentfernung zu fokussieren, bis die beiden überlagerten Bilder auf dem Monitorbildschirm übereinstimmen, wodurch angezeigt wird, daß das Objektiv der Hauptkamera auf ein Objekt fokussiert ist, das durch die beiden überlagerten Bilder dargestellt wird.

7. Verfahren nach Anspruch 6,
wobei ferner angezeigt wird, wenn das Objektiv einer Laufbildkamera auf eine Zwischenentfernung zwischen zwei Objekten fokussiert ist, indem auf dem Bildschirm eines Monitors zwei Sätze von Doppelbildern, die den beiden Objekten entsprechen und die sich nur teilweise und um gleich viel überlappen, angezeigt werden, wodurch angezeigt wird, daß das Objektiv der Laufbildkamera auf eine Entfernung eingestellt ist, die der Zwischenstellung zwischen den beiden Objekten entspricht, was somit ermöglicht, daß beide Objekte mit gleichen Schärfentiefe-Werten abgebildet werden.

## Revendications

1. Système indicateur de focalisation pour une caméra cinématographique, destiné à fonctionner conjointement avec un objectif de ladite caméra cinématographique et à en afficher le lieu de focalisation, l'indicateur de focalisation comprenant :
(a) des première et seconde caméras vidéo montées à pivotement en des positions espacées l'une de l'autre et diamétralement opposées audit objectif, les première et seconde caméras vidéo ayant des axes optiques qui se croisent au niveau d'un point de croisement sur les axes optiques de l'objectif de ladite caméra cinématographique ;
(b) des moyens fonctionnels pour recevoir et afficher simultanément des première et seconde images telles que vues par la première et respectivement la seconde caméras vidéo en relation de superposition l'une à l'autre ;
(c) des moyens de fixation pour fixer lesdites première et seconde caméras vidéo à ladite caméra cinématographique, lesdites première et seconde caméras pouvant être rapprochées et éloignées l'une de l'autre de façon réglable ;
dans lequel les première et seconde caméras vidéo peuvent être couplées par un dispositif de couplage à une bague de focalisation sur une caméra pour effectuer une rotation inverse en réponse à la rotation de la bague de focalisation pour maintenir le point de croisement à une distance, devant l'objectif, égale à la distance à laquelle la caméra cinématographique est focalisée.

2. Système indicateur de focalisation selon la revendication 1,
dans lequel lesdits moyens de fixation comprennent un cadre fixé à ladite caméra cinématographique, les première et seconde caméras cinématographiques étant montées sur ledit cadre, ladite première caméra vidéo étant montée d'un premier côté et ladite seconde caméra vidéo étant montée d'un second côté de la caméra cinématographique opposé au premier côté.

3. Système indicateur de focalisation selon la revendication 1,
comprenant, en outre, un transducteur couplé à ladite bague de focalisation et dans lequel ledit dispositif de couplage à la bague de focalisation comprend un circuit de commande pour recevoir des signaux en provenance du transducteur, les signaux étant représentatifs de la quantité de déplacement de ladite bague de focalisation, et comprenant un assemblage formant moteur agissant pour faire tourner en sens inverse lesdites première et seconde caméras vidéo en réponse à des signaux en provenance dudit circuit de commande.

4. Système indicateur de focalisation selon la revendication 2,
dans lequel les moyens fonctionnels comprennent un récepteur vidéo, un émetteur vidéo sans fil et un moniteur.

5. Système indicateur de focalisation selon la revendication 2,
dans lequel ledit cadre peut être monté de façon sélective et déplacé de façon réversible par rapport à ladite caméra cinématographique depuis une position dans laquelle les première et seconde caméras vidéo sont respectivement au-dessus et en dessous de ladite caméra cinématographique, à gauche et à droite de cette dernière ou au niveau de toute position intermédiaire.

6. Procédé pour indiquer l'endroit où l'objectif d'une caméra cinématographique est focalisé, le procédé comprenant les étapes consistant :
(a) à fournir un indicateur de focalisation comprenant des première et seconde caméras vidéo montées au niveau de côtés opposés dudit objectif de ladite caméra cinématographique ;
(b) à faire pivoter les première et seconde caméras vidéo autour d'axes parallèles en réponse à la rotation de la bague de focalisation de l'objectif, de sorte que les axes optiques des première et seconde caméras vidéo se croisent sur l'axe optique de l'objectif ;
(c) à afficher simultanément sur un moniteur des première et seconde images d'un objet tel que vu par les première et seconde caméras vidéo, respectivement ;
(d) à établir une corrélation entre la distance de déplacement de ladite bague de focalisation et la distance de rotation inverse desdites caméras vidéo ;
(e) à régler la bague de focalisation de l'objectif de la caméra primaire pour focaliser l'objectif sur un objet entre l'infini et la distance de focalisation de réglage minimale jusqu'à ce que les deux images superposées sur l'écran du moniteur coïncident, ce qui indique que l'objectif de ladite caméra primaire est focalisé sur un objet représenté par les deux images superposées.

7. Procédé selon la revendication 6,
indiquant, en outre, le moment où l'objectif d'une caméra cinématographique est focalisé sur une distance intermédiaire entre deux objets en affichant, sur l'écran d'un moniteur, deux ensembles d'images doubles correspondant aux deux objets, qui ne se chevauchent que partiellement et suivant des proportions égales, ce qui indique que l'objectif de ladite caméra cinématographique est réglé à une distance correspondant à la position intermédiaire entre les deux objets et permet de cette manière de photographier les deux objets suivant le même degré de profondeur de champ.
